# EUROPEAN PATENT APPLICATION

(11) **EP 4 360 815 A1**
(43) Date of publication of application: **01.05.2024**
(21) Application number: 22828096.2
(22) Date of filing: 13.05.2022
(51) Int. Cl.: B25J 9/14

(54) **ELECTROHYDRAULIC ROBOT**

(30) Priority: 25.06.2021 JP 2021105637
(71) Applicant: KAWASAKI JUKOGYO KABUSHIKI KAISHA, Kobe-shi, Hyogo 650-8670 (JP)
(72) Inventor: TANAKA, Hideki, Hyogo 6508670 (JP); SHIRAO, Junichi, Hyogo 6508670 (JP); FUJIWARA, Yasuhiro, Hyogo 6508670 (JP); IMAMURA, Yukito, Hyogo 6508670 (JP); YAMAMOTO, Ryo, Hyogo 6508670 (JP)
(74) Representative: EIP
(86) International application number: PCT/JP2022/020228
(87) International publication number: WO 2022/270177

(57) **Abstract**

This electrohydraulic robot includes: a manipulator including a plurality of joints; a plurality of drive devices that are provided in a one-to-one correspondence with the plurality of joints and each move a corresponding one of the plurality of joints; and a control device that controls movement of each of the plurality of drive devices. Each of the plurality of drive devices includes: a hydraulic actuator that moves a corresponding one of the plurality of joints; a hydraulic pump that supplies a working fluid to the hydraulic actuator; and an electric motor that drives the hydraulic pump. The control device is a pump of a variable capacity type that drives the electric motor and changes the discharge capacity of the hydraulic pump.

## Description

### Technical Field

The present invention relates to an electrohydraulic robot including a plurality of joints of a manipulator.

### Background Art

Articulated robots are in practical use at various work sites. Examples of the articulated robots include industrial robots and construction equipment. For example, the robot disclosed in Patent Literature (PTL) 1 is known as an industrial robot. The robot disclosed in PTL 1 includes: a manipulator including a plurality of joints; and an electric motor that drives each of the plurality of joints. The robot moves the joints using the electric motor, thereby moving an end effector located at the tip of the manipulator. Thus, the robot handles a workpiece with the end effector.

### Citation List

### Patent Literature

PTL 1: Japanese Laid-Open Patent Application Publication No. 2021-024025

### Summary of Invention

### Technical Problem

Demands for the robot disclosed in PTL 1 vary from handleability for larger workpieces to faster handling of workpieces, for example. In the robot, the size (i.e., output) of the electric motor is selected so as to ensure that specifications thereof meet the demands. Furthermore, a speed reducer is provided on the electric motor. When the speed reduction ratio of the speed reducer is set high, the joints are moved in a torque-focused manner. When the speed reduction ratio of the speed reducer is set low, the joints are moved in a speed-focused manner. Therefore, the speed reduction ratio is set according to a torque-focused or speed-focused demand. However, when the speed reduction ratio is set high, the speed for joint movement may be reduced, and when the speed reduction ratio is set low, the torque for joint movement may be insufficient. Particularly, in the case of robots, the torque and the speed that are required at each joint varies depending on the posture of the manipulator and therefore, the insufficient torque or the speed reduction at each joint results in a failure to make a desired movement.

Thus, the present invention has an object to provide an electrohydraulic robot capable of making a desired movement at each j oint when moving a plurality of joints.

### Solution to Problem

An electrohydraulic robot according to the present invention includes: a manipulator including a plurality of joints; a plurality of drive devices that are provided in a one-to-one correspondence with the plurality of joints and each move a corresponding one of the plurality of joints; and a control device that controls movement of each of the plurality of drive devices. Each of the plurality of drive devices includes: a hydraulic actuator that moves a corresponding one of the plurality of joints; a hydraulic pump of a variable capacity type that supplies a working fluid to the hydraulic actuator; and an electric motor that drives the hydraulic pump. The control device controls an operation of the electric motor and a discharge capacity of the hydraulic pump in each of the plurality of drive devices.

According to the present invention, the control device drives the electric motor and causes the working fluid to be discharged from the hydraulic pump. Furthermore, the control device controls a discharge pressure and a discharge flow rate by adjusting the discharge capacity of the hydraulic pump. This allows the control device to adjust the drive force (thrust or torque) and the speed of the hydraulic actuator. This means that the control device can move each joint in a drive-force-focused manner or a speed-focused manner by adjusting the discharge capacity of the hydraulic pump. Therefore, it is possible to make a desired movement at each joint when moving the plurality of joints.

### Advantageous Effects of Invention

With the present invention, it is possible to make a desired movement at each joint when moving a plurality of joints.

The above object, other objects, features, and advantages of the present invention will be made clear by the following detailed explanation of preferred embodiments with reference to the attached drawings.

### Brief Description of Drawings

Fig. 1 is a diagram schematically illustrating an electrohydraulic robot according to an embodiment of the present invention.
Fig. 2 is a circuit diagram illustrating a hydraulic circuit included in the electrohydraulic robot illustrated in Fig. 1.
Fig. 3 is a diagram illustrating the speed-torque relationship of a hydraulic cylinder included in the electrohydraulic robot illustrated in Fig. 1.
Fig. 4 is a diagram illustrating how the electrohydraulic robot illustrated in Fig. 1 is actuated on the basis of a movement plan.

### Description of Embodiments

Hereinafter, an electrohydraulic robot 1 (hereinafter referred to simply as "the robot") according to an embodiment of the present invention will be described with reference to the aforementioned drawings. Note that the concept of directions mentioned in the following description is used for the sake of explanation; the orientations, etc., of elements according to the invention are not limited to these directions. Furthermore, the robot 1 described below is merely one embodiment of the present invention. Thus, the present invention is not limited to the embodiments and may be subject to addition, deletion, and alteration within the scope of the essence of the invention.

### [Robot]

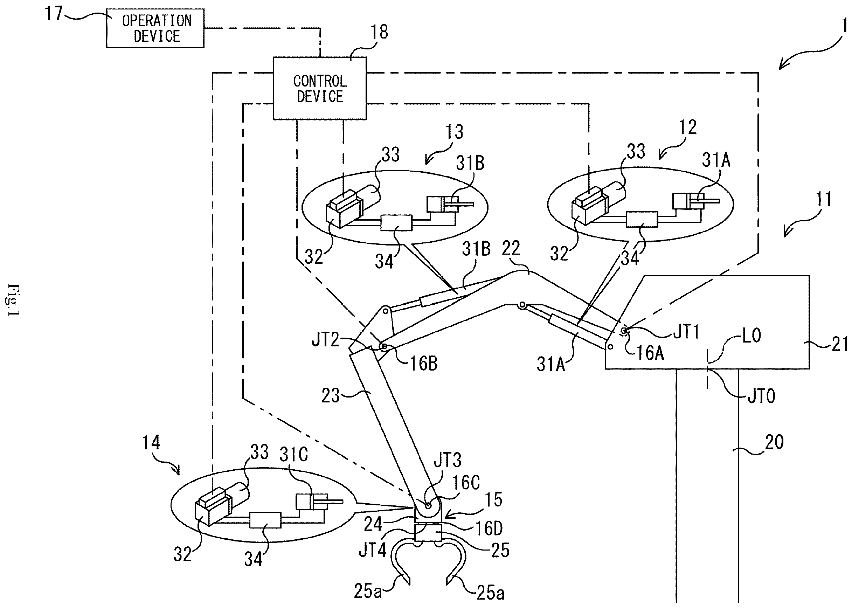

The robot 1 illustrated in Fig. 1 can be driven using electric power and a working fluid (oils, water, or other fluids). The robot 1 is placed at a work site such as a production line in a factory, for example. The robot 1 is capable of performing various tasks such as transporting, assembling, and painting. The robot 1 is an articulated robot. The robot 1 is an industrial robot, construction equipment such as an excavator and a crane, a tunnel boring machine, a cargo vehicle, a service robot, or a humanoid, for example. In the present embodiment, the robot 1 is a vertical articulated industrial robot. The robot 1 includes a manipulator 11, a plurality of drive devices 12 to 15, a plurality of angular displacement sensors 16A to 16D, an operation device 17, and a control device 18.

### [Manipulator]

The manipulator 11 includes a plurality of joints JT0 to JT4. In the present embodiment, the manipulator 11 includes five joints JT0 to JT4. Note that the number of joints JT0 to JT4 of the manipulator 11 is not limited to four and may be three or four or may be six or more. Furthermore, the shape of the manipulator 11 is not limited to that described below. More specifically, the manipulator 11 includes a turning body 21, a first arm 22, a second arm 23, a third arm 24, and an end effector 25. The elements 21 to 25 are coupled to each other in such a manner as to allow angular displacement thereof. Portions of manipulator 11 at which the elements 21 to 25 are coupled to each other constitute the joints JT0 to JT4. The manipulator 11 can assume various postures by moving the plurality of joints JT0 to JT4. Furthermore, the manipulator 11 can perform various tasks by operating the end effector 25. Hereinafter, the elements 21 to 25 will be described in detail.

The turning body 21 is fixed to a floor or the like via a base 20. The turning body 21 is provided on the base 20 in such a manner as to be able to rotate about a predetermined axial line L0. The turning body 21 constitutes the joint JT0 at a portion coupled to the base 30. Note that the shape of the base 20 is not limited to the aforementioned shape. The turning body 21 may be provided on a traveling device that travels on the floor, the ground, or the like. The turning body 21 is turned using a driver not illustrated in the drawings, for example, an electric motor or a hydraulic motor. Thus, the orientation of the turning body 21 (more specifically, the orientation of the manipulator 11) can be changed.

The first arm 22 is rotatably coupled to the turning body 21. More specifically, one end portion of the first arm 22 is rotatably coupled to a front portion of the turning body 21. The first arm 22 constitutes the first joint JT1 at a portion coupled to the turning body 21. More specifically, the first arm 22 extends diagonally upward to the front from the turning body 21, for example. At the first joint JT1, the first arm 22 can swing vertically with respect to the turning body 21.

The second arm 23 is rotatably coupled to the first arm 22. More specifically, one end portion of the second arm 23 is rotatably coupled to the other end portion of the first arm 22. The second arm 23 constitutes the second joint JT2 at a portion coupled to the first arm 22. More specifically, the second arm 23 extends diagonally downward to the front from the other end of the first arm 22, for example. At the second joint JT2, the second arm 23 can swing depthwise with respect to the first arm 22.

The third arm 24 is rotatably coupled to the second arm 23. More specifically, one end portion of the third arm 24 is rotatably coupled to the other end portion of the second arm 23. The third arm 24 constitutes the third joint JT3 at a portion coupled to the second arm 23. More specifically, the third arm 24 extends downward from the other end of the second arm 23, for example. At the third joint JT3, the third arm 24 can swing depthwise with respect to the second arm 23.

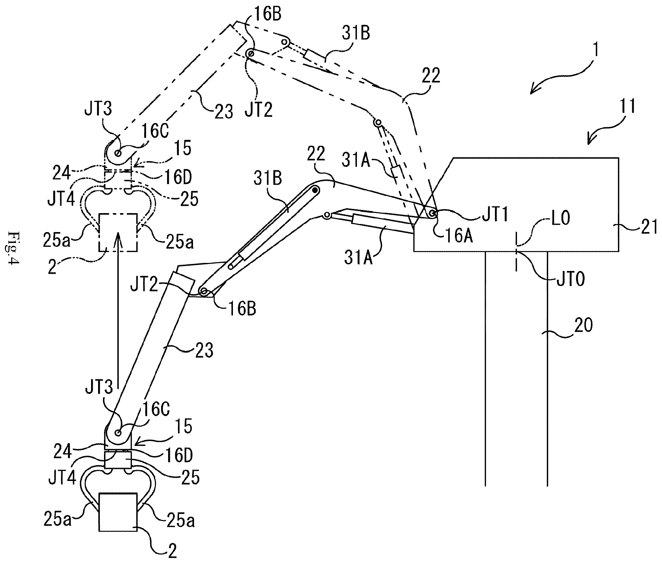

The end effector 25 is rotatably coupled to the third arm 24. More specifically, the end effector 25 is coupled to the other end of the third arm 24 in such a manner as to be able to rotate about an axial line orthogonal to the other end surface of the third arm 24. The end effector 25 constitutes the fourth joint JT4 at a portion coupled to the third arm 24. At the fourth joint JT4, the end effector 25 can rotate about said axial line with respect to the third arm 24. The end effector 25 disposed as just described is a device that performs various tasks on a workpiece 2 (refer to the workpiece 2 illustrated in Fig. 4 which will be described later). More specifically, the end effector 25 is a hand that picks the workpiece 2, a suction device that attaches to the workpiece 2 by suction and lifts the workpiece 2, a screwdriver that tightens a screw on the workpiece 2, or a welding machine that welds the workpiece 2, for example. In the present embodiment, the end effector 25 is a hand and picks the workpiece 2 by closing a pair of grippers 25a.

The plurality of drive devices 12 to 15 are independently provided in a one-to-one correspondence with the four joints JT1 to JT4. The first to fourth drive devices 12 to 15 move the corresponding joints JT1 to JT4. Hereinafter, the elements of the first to fourth drive devices 12 to 15 will be described in detail. On the other hand, the first to third drive devices 12 to 14 have similar elements. Therefore, regarding the first to third drive devices 12 to 14, elements of the first drive device 12 will be mainly described. Elements of the second and third drive devices 13, 14 that are the same as those of the first drive device 12 will be assigned the same reference signs and description thereof will be omitted while elements of the second and third drive devices 13, 14 that are different from those of the first drive device 12 will be mainly described.

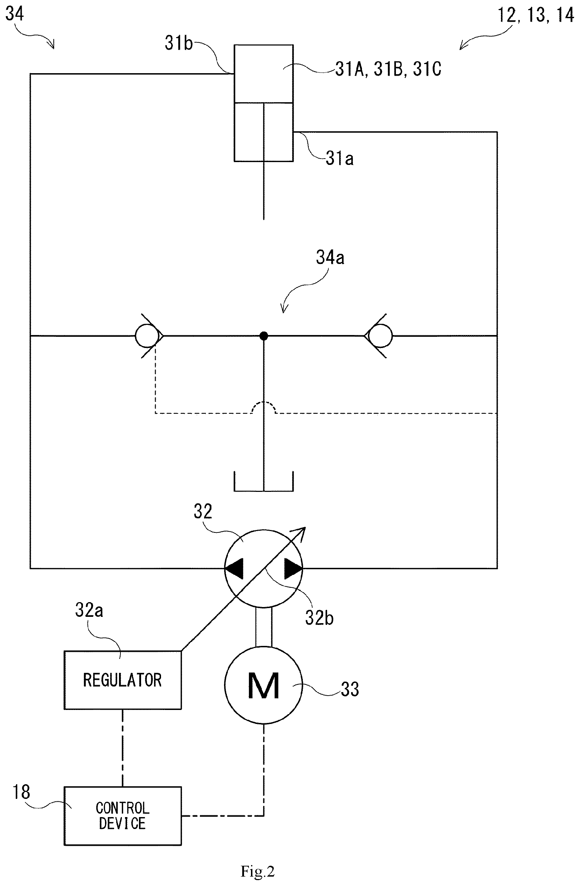

The first drive device 12 moves the first joint JT1. Specifically, the first drive device 12 drives the first arm 22 so that the first arm 22 swings with respect to the turning body 21. More specifically, the first drive device 12 includes a first hydraulic cylinder 31A, a hydraulic pump 32, an electric motor 33, and a hydraulic circuit 34, as illustrated in Fig. 2. The first drive device 12 is a hydraulically driven actuator. Specifically, the first drive device 12 drives the hydraulic pump 32 using the electric motor 33. Furthermore, the first drive device 12 actuates the first hydraulic cylinder 31A using a pressurized fluid discharged from the hydraulic pump 32. Hereinafter, the elements of the first drive device 12 will be described in detail.

The first hydraulic cylinder 31A, which is one example of the hydraulic actuator, moves the corresponding joint JT1, namely, the first joint JT1. More specifically, the first hydraulic cylinder 31A is provided so as to serve as a bridge between the turning body 21 and the first arm 22, as illustrated in Fig. 1. Furthermore, the first hydraulic cylinder 31A can stretch when supplied with the pressurized fluid. By stretching, the first hydraulic cylinder 31A causes the first arm 22 to swing with respect to the turning body 21, in other words, moves the first joint JT 1.

The hydraulic pump 32 illustrated in Fig. 2 discharges the pressurized fluid in order to supply the working fluid to the first hydraulic actuator 31A. More specifically, the hydraulic pump 32 discharges the pressurized fluid in one direction and the other direction according to a rotational direction. The hydraulic pump 32 is a pump of the variable capacity type with a discharge capacity varying according to a command from the control device 18, which will be described later. In the present embodiment, the hydraulic pump 32 is a swash plate pump of the variable capacity type. Specifically, the hydraulic pump 32 includes a regulator 32a and a swash plate 32b. The regulator 32a is driven using a direct-acting motor or a pilot pressure output from a control valve not illustrated in the drawings. When driven, the regulator 32a changes the tilt angle of the swash plate 32b. Accordingly, the discharge capacity of the hydraulic pump 32 is changed. Note that the hydraulic pump 32 is not limited to the swash plate pump of the variable capacity type and may be an axial piston pump of the variable capacity type or may be any pump with a variable discharge capacity. The hydraulic pump 32 is attached to a portion other than a corresponding arm, that is, the first arm 22. The hydraulic pump 32 is attached to a floor (not illustrated in the drawings) to which the turning body 21 and the base 20 are fixed, for example. Note that the attachment position is not limited to said position.

The electric motor 33 drives the hydraulic pump 32. More specifically, the electric motor 33 rotatably drives the hydraulic pump 32 to cause the hydraulic pump 32 to discharge the pressurized fluid. The electric motor 33 can rotatably drives the hydraulic pump 32 forward and backward. Thus, the electric motor 33 can cause the hydraulic pump 32 to discharge the pressurized fluid in one direction and the other direction. In the present embodiment, the electric motor 33 is a servomotor. Note that the electric motor 33 is not limited to the servomotor and may be another motor. The electric motor 33 is attached to a floor (not illustrated in the drawings) to which the turning body 21 and the base 20 are fixed, for example. Note that the attachment position is not limited to said position.

The hydraulic circuit 34 connects the first hydraulic cylinder 31A and the hydraulic pump 32. More specifically, the hydraulic circuit 34 supplies the first hydraulic cylinder 31A with the pressurized fluid discharged from the hydraulic pump 32 and causes the pressurized fluid to be drained from the first hydraulic cylinder 31A. In the present embodiment, the hydraulic circuit 34 forms a closed circuit together with the first hydraulic cylinder 31A and the hydraulic pump 32. Specifically, the hydraulic circuit 34 supplies the first hydraulic cylinder 31A with the pressurized fluid discharged from the hydraulic pump 32 and returns the pressurized fluid from the first hydraulic cylinder 31A to the hydraulic pump 32. For example, the hydraulic circuit 34 brings, to a rod-end port 31a of the first hydraulic cylinder 31A, the pressurized fluid discharged from the hydraulic pump 32 in one direction, and also brings, to a head-end portion 31b of the first hydraulic cylinder 31A, the pressurized fluid discharged from the hydraulic pump 32 in the other direction. Thus, the first hydraulic cylinder 31A stretches. Furthermore, the hydraulic circuit 34 includes a supply/drain mechanism 34a. The supply/drain mechanism 34a brings, back to a tank, a portion of the pressurized fluid drained from the head-end port 31b of the first hydraulic cylinder 31A. Furthermore, the supply/drain mechanism 34a adds a fluid pressure to compensate for an insufficient fluid pressure when supplying the pressurized fluid to the rod-end port 31a of the first hydraulic cylinder 31A. Note that the configuration of the supply/drain mechanism 34a is not limited to that illustrated in Fig. 2.

In the first drive device 12 configured as described above, the electric motor 33 drives the hydraulic pump 32. Thus, the pressurized fluid is discharged from the hydraulic pump 32 in one of the first direction and the other direction according to the rotational direction. For example, when the pressurized fluid is discharged from the hydraulic pump 32 in one direction, the first hydraulic cylinder 31A is retracted. This causes the first arm 22 to swing downward at the first joint JT1. On the other hand, when the pressurized fluid is discharged from the hydraulic pump 32 in the other direction, the first hydraulic cylinder 31A is extended. This causes the first arm 22 to swing upward at the first joint JT1.

The second drive device 13 moves the second joint JT2. Specifically, the second drive device 13 causes the second arm 23 to swing with respect to the first arm 22. More specifically, the second drive device 13 includes a second hydraulic cylinder 31B, a hydraulic pump 32, an electric motor 33, and a hydraulic circuit 34.

The second hydraulic cylinder 31B, which is one example of the hydraulic actuator, moves the corresponding joint JT2, namely, the second joint JT2. More specifically, the second hydraulic cylinder 31B is provided so as to serve as a bridge between the first arm 22 and the second arm 23, as illustrated in Fig. 1. Furthermore, the second hydraulic cylinder 31B can stretch when supplied with the pressurized fluid. By stretching, the second hydraulic cylinder 31B causes the second arm 23 to swing with respect to the first arm 22, in other words, moves the second joint JT2.

In the second drive device 13 configured as described above, when the electric motor 33 drives the hydraulic pump 32 so that the pressurized fluid is discharged from the hydraulic pump 32 in one direction, the second hydraulic cylinder 31B is retracted. This causes the second arm 23 to swing forward at the second joint JT2. On the other hand, when the pressurized fluid is discharged from the hydraulic pump 32 in the other direction, the second hydraulic cylinder 31B is extended. This causes the second arm 23 to swing backward at the second joint JT2.

The third drive device 14 moves the third joint JT3. Specifically, the third drive device 14 causes the third arm 24 to swing with respect to the second arm 23. More specifically, the third drive device 14 includes a third hydraulic cylinder 31C, a hydraulic pump 32, an electric motor 33, and a hydraulic circuit 34.

The third hydraulic cylinder 31C, which is one example of the hydraulic actuator, moves the corresponding joint JT3, namely, the third joint JT3. More specifically, the third hydraulic cylinder 31C is provided so as to serve as a bridge between the second arm 23 and the third arm 24, as illustrated in Fig. 1. Furthermore, the third hydraulic cylinder 31C can stretch when supplied with the pressurized fluid. By stretching, the third hydraulic cylinder 31C causes the third arm 24 to swing with respect to the second arm 23, in other words, moves the third joint JT3.

In the third drive device 14 configured as described above, when the electric motor 33 drives the hydraulic pump 32 so that the pressurized fluid is discharged from the hydraulic pump 32 in one direction, the third hydraulic cylinder 31C is retracted. This causes the third arm 24 to swing backward at the third j oint JT3. On the other hand, when the pressurized fluid is discharged from the hydraulic pump 32 in the other direction, the third hydraulic cylinder 31C is extended. This causes the third arm 24 to swing forward at the third joint JT3.

The fourth drive device 15 moves the fourth joint JT4. The fourth drive device 15 rotates the end effector 25 with respect to the third arm 24. More specifically, the fourth drive device 15 includes an electric motor and a speed reducer not illustrated in the drawings. When the electric motor is driven, the end effector 25 is rotatably driven via the speed reducer.

### [Angular Displacement Sensor]

The angular displacement sensors 16A to 16D, which are one example of the displacement amount detector and the position detector, detect the amounts of displacement of the joints JT1 to JT4 of the manipulator 11. More specifically, the angular displacement sensors 16A to 16D are provided in a one-to-one correspondence with the joints JT1 to JT4. The angular displacement sensors 16A to 16D detect the amounts of angular displacement (i.e., the tilt angles) of the joints JT1 to JT4 of the manipulator 11.

### [Operation Device]

The operation device 17 illustrated in Fig. 1 provides a position command about the position of the end effector 25. The operation device 17 is, for example, a joystick, and includes an operation lever not illustrated in the drawings, for example. The operation device 17 outputs a position command corresponding to the direction and angle of tilt (i.e., the amount of operation) of the operation lever. Note that the operation device 17 does not need to be a joystick and may be a touch panel on which an operation can be performed via a screen. Furthermore, the operation device 17 does not necessarily need to output the position command and may receive the movement plan, which will be described later.

### [Control Device]

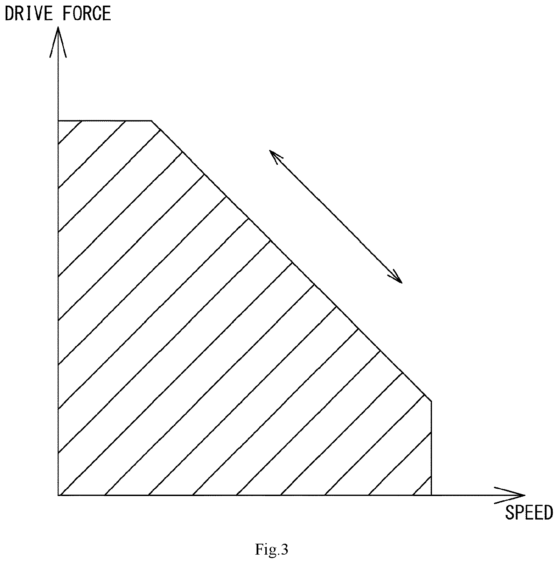

The control device 18 controls the movement of the driver that drives the turning body 21 and each of the first to fourth drive devices 12 to 15. Furthermore, the control device 18 moves each of the joints JT0 to JT4 of the manipulator 11. More specifically, using the driver, the control device 18 causes the turning body 21 to turn, in other words, moves the joint JT0. Thus, the control device 18 changes the orientation of the manipulator 11. Furthermore, the control device 18 drives the electric motors 33 of the first to third drive devices 12 to 14, causing the working fluid to be discharged from the hydraulic pumps 32. Thus, the hydraulic cylinders 31A and 31C are actuated. Accordingly, the first to third arms 22 to 24 swing, meaning that the first to third joints JT1 to JT3 move. Furthermore, the control device 18 controls the position of the end effector 25 by moving each of the joints JT 1 to JT3. In addition, by controlling the movement of the joint JT4 and the movement of the end effector 25, the control device 18 causes the workpiece 2 to be picked and held. Moreover, the control device 18 adjusts the discharge capacity of the hydraulic pump 32. Specifically, the control device 18 adjusts the discharge capacity of the hydraulic pump 32 by controlling the operation of the control valve or the direct-acting motor (not illustrated in the drawings) of the regulator 32a. Furthermore, the control device 18 controls the discharge pressure and the discharge flow rate at the hydraulic pump 32. Thus, the control device 18 can adjust the drive force (in the present embodiment, the thrust) and the speed of the hydraulic cylinders 31A to 31C (refer to Fig. 3).

More specifically, in the control device 18, the movement plan regarding the manipulator 11 is stored. The control device 18 controls the movement of the driver in accordance with the movement plan or the operation command from the operation device 17. Thus, the control device 18 changes the orientation of the end effector 25. Furthermore, the control device 18 controls the operation of the electric motors 33 and the discharge capacity of the hydraulic pumps 32 of the first to the third drive devices 12 to 14 in accordance with the movement plan or the operation command from the operation device 17. Thus, the control device 18 changes the position of the end effector 25. Here, the movement plan is a plan regarding a path in which the end effector 25 moves and tasks for the end effector 25 (in the present embodiment, the task of picking and holding the workpiece 2 and the task of releasing the workpiece 2, for example). The movement plan is stored into the control device 18 in advance as a program or is selectively input from the operation device 17.

More specifically, the control device 18 obtains detection results from the angular displacement sensors 16A to 16C. Subsequently, the control device 18 controls the discharge capacity of the hydraulic pumps 32 of the drive devices 12 to 14 on the basis of the movement plan and the detection results from the angular displacement sensors 16A to 16C. More specifically, the control device 18 calculates a target amount of displacement (that is a target amount of angular displacement and will be hereinafter referred to as "the target value" in the present embodiment) of each of the joints JT1 to JT3 on the basis of the movement plan (for example, the trajectory of the end effector 25), for example. Note that the target value may be included in the movement plan. Subsequently, the control device 18 compares the target value and the amounts of displacement of the joints JT1 to JT3 detected by the angular displacement sensors 16A to 16C (each of which is the amount of angular displacement detected and will be hereinafter referred to as "the actual value" in the present embodiment). Furthermore, the control device 18 drives the electric motor 33 of each of the drive devices 12 to 14 so that the target value and the actual value match. Thus, the control device 18 changes the position of the end effector 25.

Furthermore, the control device 18 controls the discharge capacity of the hydraulic pump 32 of each of the drive devices 12 to 14 according to the difference between the target value and the actual value included in the comparison result. For example, when the actual value is less than the target value, the discharge capacity of the hydraulic pump 32 is increased. On the other hand, when the actual value exceeds the target value, the discharge capacity of the hydraulic pump 32 is reduced. Thus, the drive force to be generated at the hydraulic cylinders 31A to 31C is adjusted; note that in the present embodiment, the control device 18 adjusts the drive force at the hydraulic cylinders 31A to 31C by controlling the output torque of the electric motor 33. When the output torque of the electric motor 33 reaches a predetermined torque (for example, the maximum torque), the control device 18 adjusts the discharge capacity of the hydraulic pump 32 to adjust the drive force at the hydraulic cylinders 31A to 31C. However, the control device 18 does not necessarily need to adjust the discharge capacity of the hydraulic pump 32 when the output torque of the electric motor 33 reaches the predetermined torque (for example, the maximum torque). For example, the control device 18 may comprehensively control the output torque of the electric motor 33 and the discharge capacity of the hydraulic pump 32 according to the energy efficiency or the like.

### <Movement of Robot>

### [Movement based on Movement Plan (Angular Displacement Sensor)]

The following will describe the case where the control device 18 automatically operates the manipulator 11 on the basis of the movement plan and the angular displacement sensors 16A to 16C in the robot 1. For example, in the state where the end effector 25 is not holding the workpiece 2, the control device 18 moves the manipulator 11 as follows. Specifically, the control device 18 changes the position of the end effector 25 on the basis of the movement plan. More specifically, the control device 18 changes the position of the end effector 25 by driving the electric motor 33 of each of the drive devices 12 to 14. For example, in a standby state before the movement plan is started, the control device 18 maximizes the discharge capacity of the hydraulic pump 32. The control device 18 drives the electric motor 33 of each of the drive devices 12 to 14 while the discharge capacity of the hydraulic pump32 is maximum (this state will be hereinafter referred to as "the maximized state"). Furthermore, the control device 18 controls the position of the end effector 25 by driving the electric motor 33 of each of the drive devices 12 to 14 on the basis of the result of comparison between the target value and the actual value (the comparison result).

Next, the case will be described in which the control device 18 automatically operates the manipulator 11 on the basis of the movement plan indicating that the end effector 25 is to vertically lift the workpiece 2, as illustrated in Fig. 4, after the end effector 25 moves down and picks and holds the workpiece 2. This means that the control device 18 controls the position of the end effector 25 in the aforementioned method in the state where the end effector 25 is not picking or holding the workpiece 2. After moving the end effector 25 down to the workpiece 2, the control device 18 actuates the fourth joint JT4 and the end effector 25, thereby causing the end effector 25 to pick and hold the workpiece 2.

After the workpiece 2 is successfully picked and held, the control device 18 moves up the end effector 25 holding the workpiece 2 on the basis of the movement plan. More specifically, the control device 18 moves up the end effector 25 by driving the electric motor 33 of each of the drive devices 12 to 14. At this time, the control device 18 also controls the discharge capacity of the hydraulic pump 32 of each of the drive devices 12 to 14 according to the loads on the first to third joints JT1 to JT3. Specifically, the control device 18 compares the target value and the actual value of each of the first to third joints JT1 to JT3. Subsequently, the control device 18 first adjusts the output torque of the electric motor 33 of each of the drive devices 12 to 14 according to the difference between the target value and the actual value. For example, when the workpiece 2 has a low weight, the control device 18 can adjust the output torque of the electric motor 33 while maintaining the maximized state. This allows the control device 18 to secure the discharge flow rate at the hydraulic pump 32 while reducing the discharge pressure at the hydraulic pump 32. Therefore, the control device 18 can move the manipulator 11 in a speed-focused manner.

On the other hand, when the workpiece 2 has a high weight, the control device 18 controls each of the drive devices 12 to 15 as follows. Specifically, when the output torque of the electric motor 33 reaches the maximum and the actual value is less than the target value, the control device 18 reduces the discharge capacity of the hydraulic pump 32 of each of the drive devices 12 to 14. Thus, the control device 18 can increase the discharge pressure at the hydraulic pump 32 of each of the drive devices 12 to 15. In other words, the control device 18 can generate a greater drive force at the hydraulic actuator. Therefore, the control device 18 can cause the manipulator 11 to lift a high-load workpiece 2. In other words, the control device 18 can move the manipulator 11 in a drive-force-focused manner. Note that when the target value exceeds the actual value, the control device 18 increases the discharge capacity of the hydraulic pump 32 of each of the drive devices 12 to 14 or controls the output torque of the electric motor 33 of each of the drive devices 12 to 14. Accordingly, the drive force at each of the hydraulic cylinders 31A to 31C is reduced, and thus the actual value can approach the target value.

In the robot 1 according to the present embodiment, when automatically operating the manipulator 11 on the basis of the movement plan, the control device 18 controls the discharge pressure and the discharge flow rate by adjusting the discharge capacity of the hydraulic pump 32 of each of the drive devices 12 to 14. This allows the control device 18 to adjust the drive force and the speed of each of the hydraulic cylinders 31A to 31C. This means that the control device 18 can move each of the j oints JT1 to JT3 in a drive-force-focused manner and a speed-focused manner by adjusting the discharge capacity of the hydraulic pump 32. Therefore, it is possible to make a desired movement at each of the joints JT1 to JT3 when moving the plurality of joints JT1 to JT3. In other words, one of a high-speed, low torque and a low-speed, high torque is selected as the drive state of each of the joints JT1 o JT3. Therefore, the maximum torque required for the electric motor 33 can be reduced. Accordingly, the size of the electric motor 33 can be reduced.

Furthermore, in the robot 1, by adjusting the discharge capacity of the hydraulic pump 32 when controlling the position of the end effector 25, it is possible to reduce the occurrence of the drive force at each of the joints JT1 to JT3 becoming insufficient. Thus, the joints JT1 to JT3 can be moved in conjunction according to the movement plan and therefore, the end effector 25 can be moved along a desired path (that is, a path indicated in the movement plan). This allows for improved work efficiency of the manipulator 11.

Furthermore, in the robot 1, the control device 18 controls the discharge capacity of the hydraulic pump 32 and the electric motor 33 of each of the drive devices 12 to 14 in accordance with the movement plan stored in advance. Therefore, the control device 18 can more appropriately move the joints JT1 to JT3. This allows for improved work efficiency of the manipulator 11.

Furthermore, in the robot 1, the control device 18 controls the discharge capacity of the hydraulic pump32 on the basis of the target value and the actual value regarding the position of each of the joints JT1 to JT3. For example, when the actual value is less than the target value because the drive force at each of the joints JT1 to JT3 is insufficient, the drive force can be increased by reducing the discharge capacity of the hydraulic pump 32. Therefore, it is possible to minimize the reduction in the work efficiency of the manipulator 11 that occurs due to an insufficient torque of the electric motor 33.

Furthermore, in the robot 1, since the hydraulic circuit 34 forms a closed circuit, a pressure loss can be reduced, and the number of components can be reduced.

### [Movement based on Movement Plan (Set Load)]

The following will describe the case where the control device 18 automatically operates the manipulator 11 on the basis of a load that is set in the movement plan (hereinafter referred to as "the set load") in the robot 1. Specifically, the control device 18 changes the position of the end effector 25 on the basis of the set load. In other words, the control device 18 drives the electric motor 33 while controlling the discharge capacity of the hydraulic pump 32 according to the set load in each of the drive devices 12 to 14. More specifically, when the set load is less than or equal to a predetermined drive force, the output torque of the electric motor 33 is controlled while the maximized state is maintained. Here, the predetermined drive force refers to the drive force generated at the hydraulic cylinders 31A to 31C when the output torque of the electric motor 33 reaches the maximum torque while the maximized state is maintained, for example. On the other hand, when the set load exceeds the predetermined drive force, the control device 18 sets the output torque of the electric motor 33 to the maximum torque and controls the discharge capacity of the hydraulic pump 32 according to the set load. Thus, the control device 18 can cause a desired drive force to be generated at each of the hydraulic cylinders 31A to 31C. In other words, the control device 18 can cause a torque corresponding to the set load to be generated at each of the joints JT1 to JT3. Thus, the control device 18 can move the manipulator 11 in accordance with the movement plan.

In the robot 1 according to the present embodiment, when the control device 18 operates the manipulator 11 on the basis of the set load, it is possible to minimize the reduction in the work efficiency of the manipulator 11 that occurs due to an insufficient torque and a speed reduction of the electric motor 33.

Furthermore, in the robot 1, in the case where the manipulator 11 is automatically operated on the basis of the set load, the control device 18 can determine, before actual movement, a drive force required by each of the joints JT1 to JT3 at a corresponding position during the movement based on the movement plan. Therefore, the movement plan may include how to change the discharge capacity of the hydraulic pump 32 during the control of the drive force.

Aside from this, when automatically operating the manipulator 11 on the basis of the set load, the robot 1 produces advantageous effects that are substantially the same as those produced when automatically operating the manipulator 11 on the basis of the movement plan.

### [Movement based on Operation of Operation Device]

The following will describe the case where the control device 18 moves the manipulator 11 on the basis of an operation performed on the operation lever of the operation device 17 in the robot 1. For example, in the state where the end effector 25 is not picking or holding the workpiece 2, the control device 18 moves the manipulator 11 as follows. Specifically, when the operation lever is operated, the control device 18 changes the position of the end effector 25 on the basis of the position command from the operation device 17. More specifically, the control device 18 drives the electric motor 33 of each of the drive devices 12 to 14 while the maximized state is maintained. Furthermore, the control device 18 calculates a target value for each of the joints JT1 to JT3 on the basis of the position command. Subsequently, as in the case of automatic operation, the control device 18 controls the position of the end effector 25 by driving the electric motor 33 of each of the drive devices 12 to 14 on the basis of the result of comparison between the position command (more specifically, the target value) and the actual value. Note that the command from the control device 18 is not limited to the position command and may be a speed command (a rotational speed command). In this case, the control device 18 drives the electric motor 33 of each of the drive devices 12 to 14 on the basis of the result of comparison between the speed command and an actual value (that is, an actual speed). Thus, the speed of the end effector 25 is controlled.

Next, the case will be described where the end effector 25 is moved up in the state where the workpiece 2 is held as illustrated in Fig. 4. When the operation lever is operated in the state where the end effector 25 is holding the workpiece 2, the control device 18 controls the movement of each of the drive devices 12 to 14 as follows, specifically, the control device 18 compares the target value and the actual value as in the case of automatic operation. Subsequently, the control device 18 first adjusts the output torque of the electric motor 33 of each of the drive devices 12 to 14 according to the difference between the target value and the actual value. As with the movement plan, when the workpiece 2 has a low weight, the control device 18 adjusts the output torque of the electric motor 33 while maintaining the maximized state. On the other hand, when the output torque of the electric motor 33 reaches the maximum and the actual value is less than the target value, the control device 18 reduces the discharge capacity of the hydraulic pump 32 of each of the drive devices 12 to 14. Thus, the control device 18 can move the manipulator 11 in a drive-force-focused manner. When the actual value exceeds the target value, the control device 18 reduces the discharge capacity of the hydraulic pump 32 of each of the drive devices 12 to 14 or controls the output torque of the electric motor 33 of each of the drive devices 12 to 14. Accordingly, the drive force at each of the hydraulic cylinders 31A to 31C is reduced, and thus the actual value can approach the target value.

In the robot 1 according to the present embodiment, when moving the manipulator 11 on the basis of the position command from the operation device 17, the control device 18 controls the discharge capacity of the hydraulic pump 32 on the basis of the actual value and the target value based on the position in the command. For example, when the actual value is less than the target value because the drive force at each of the joints is insufficient, the drive force can be increased by reducing the discharge capacity of the hydraulic pump 32. Therefore, it is possible to minimize the reduction in the work efficiency of the manipulator 11 that occurs due to an insufficient torque of the electric motor 33.

Aside from this, when moving the manipulator 11 on the basis of the position command from the operation device 17, the robot 1 produces advantageous effects that are substantially the same as those produced when automatically operating the manipulator 11 on the basis of the movement plan.

### [Other Embodiments]

The form of the manipulator 11 in the robot 1 according to the present embodiment is merely one example. Specifically, the robot 1 is a vertical articulated robot in the present embodiment, but may be a different articulated robot such as a horizontal articulated robot. Furthermore, the robot 1 may be a serial-link robot or a parallel-link robot such as another coordinate-axis robot. The end effector does not need to be formed at the tip portion of the manipulator 11 and may be formed midway through the manipulator 11. Furthermore, the end effector 25 is not limited to the hand and may be a bucket, a breaker, or the like of construction equipment or may be a different end effector and an attachment. Moreover, the operation device 17 is not limited either to that including the operation lever and may be a touch panel, a switch, or the like. In other words, it is sufficient that the operation device 17 be an element to which the command can be input.

Furthermore, in the robot 1, the hydraulic actuator is each of the hydraulic cylinders 31A to 31C, but may be a hydraulic motor. For example, the drive device 15 that moves the fourth joint JT4 and a turning device that turns the turning body 21 are configured to include a hydraulic motor which is one example of the hydraulic actuator. The control device 18 controls the movement of the electric motor on the basis of the movement plan and the operation device 17, thereby causing the pressurized fluid to be supplied from the hydraulic pump 32 to the hydraulic motor. Furthermore, the control device 18 controls the torque of the hydraulic motor by adjusting the discharge capacity of the hydraulic pump 32. Thus, a torque greater than or equal to the maximum torque of the electric motor can be generated at the fourth joint JT4 and the turning body 21.

Furthermore, in the robot 1, the hydraulic actuators that drive the first to third joints JT1 to JT3 are not limited either to the hydraulic cylinders 31A to 31C. The hydraulic actuators may be hydraulic motors. Furthermore, the first to third joints JT1 to JT3 are not limited either to revolute joints and may be prismatic joints. Note that in the case of prismatic joints, the position detector detects an amount of expansion and contraction of the arm, and the control device 18 controls the drive devices so that the amount of expansion and contraction reaches the target value.

Furthermore, in the robot 1, the hydraulic pump 32 is a single-tilting swash plate pump, but the hydraulic pump 32 may be a double-tilting swash plate pump. Moreover, in the robot 1, the hydraulic circuit 34 forms a closed circuit, but may form an open circuit. The method for controlling each of the drive devices 12 to 14 by the control device 18 in the robot 1 is not limited either to the aforementioned method. The robot 1 includes the operation device 17, but does not necessarily need to include the operation device 17.

Furthermore, in the robot 1, the discharge capacity of the hydraulic pump 32 is maximized, and the torque of the electric motor 33 is adjusted to adjust the drive force (the speed-focused manner). Subsequently, when the torque of the electric motor 33 exceeds the maximum, the discharge capacity of the hydraulic pump 32 is changed (the drive-force-focused manner). However, the method for controlling the discharge capacity of the hydraulic pump 32 and the torque of the electric motor 33 is not limited to this method. For example, the control device 18 minimizes the discharge capacity of the hydraulic pump 32 and adjusts the torque of the electric motor 33 to adjust the drive force (the drive-force-focused manner). Subsequently, when the torque of the electric motor 33 exceeds the maximum, the control device 18 changes the discharge capacity of the hydraulic pump 32 (the speed-focused manner).

Furthermore, the control device 18 may change the discharge capacity of the hydraulic pump 32 before the torque of the electric motor 33 reaches the maximum. Specifically, the control device 18 may control the torque (or the rotational speed) of the electric motor 33 and the discharge capacity of the hydraulic pump 32 so that the total efficiency of the electric motor 33 and the hydraulic pump 32 is maximized (an efficiency-focused manner), for example. Aside from this, another control method may also be used to control the operation of the electric motor 33 and the discharge capacity of the hydraulic pump 32.

From the foregoing description, many modifications and other embodiments of the present invention would be obvious to a person having ordinary skill in the art. Therefore, the foregoing description should be interpreted only as an example and is provided for the purpose of teaching the best mode for carrying out the present invention to a person having ordinary skill in the art. Substantial changes in details of the structures and/or functions of the present invention are possible within the spirit of the present invention.

## Claims

1. An electrohydraulic robot comprising:
a manipulator including a plurality of joints;
a plurality of drive devices that are provided in a one-to-one correspondence with the plurality of joints and each move a corresponding one of the plurality of joints; and
a control device that controls movement of each of the plurality of drive devices, wherein:
each of the plurality of drive devices includes: a hydraulic actuator that moves a corresponding one of the plurality of joints; a hydraulic pump of a variable capacity type that supplies a working fluid to the hydraulic actuator; and an electric motor that drives the hydraulic pump; and
the control device controls an operation of the electric motor and a discharge capacity of the hydraulic pump in each of the plurality of drive devices.

2. The electrohydraulic robot according to claim 1, wherein:
the manipulator includes an end effector; and
the control device moves the manipulator and controls a position of the end effector by controlling the operation of the electric motor and the discharge capacity of the hydraulic pump in each of the plurality of drive devices.

3. The electrohydraulic robot according to claim 1 or 2, wherein:
each of the plurality of drive devices further includes a hydraulic circuit that connects the hydraulic actuator and the hydraulic pump; and
the hydraulic circuit forms a closed circuit together with the hydraulic actuator and the hydraulic pump.

4. The electrohydraulic robot according to any one of claims 1 to 3, wherein:
the control device stores a movement plan regarding the manipulator and controls the operation of the electric motor and the discharge capacity of the hydraulic pump in each of the plurality of drive devices in accordance with the movement plan.

5. The electrohydraulic robot according to claim 4, further comprising:
a displacement amount detector that detects an amount of displacement of each of the plurality of joints of the manipulator, wherein:
the movement plan includes a target value of a position of each of the plurality of joints; and
the control device controls the discharge capacity of the hydraulic pump in each of the plurality of drive devices on the basis of the target value included in the movement plan and a result of the detection by the displacement amount detector.

6. The electrohydraulic robot according to claim 4, wherein:
when a load on each of the plurality of joints that is set in the movement plan is greater than or equal to a predetermined drive force, the control device controls the discharge capacity of the hydraulic pump in a corresponding one of the plurality of drive devices.

7. The electrohydraulic robot according to claim 2, further comprising:
an operation device that outputs a position command about the position of the end effector; and
a position detector that detects a position of each of the plurality of joints of the manipulator, wherein:
the control device controls the discharge capacity of the hydraulic pump in each of the plurality of drive devices on the basis of the position command from the operation device and a result of the detection by the position detector.

8. The electrohydraulic robot according to any one of claims 1 to 6, wherein:
the hydraulic actuator is a hydraulic cylinder that is extended and retracted according to supply of the working fluid from the hydraulic pump; and
the hydraulic cylinder is extended and retracted to move a corresponding one of the plurality of joints of the manipulator.
